# EUROPEAN PATENT APPLICATION

(11) **EP 2 017 534 A1**
(43) Date of publication of application: **21.01.2009**
(21) Application number: 08160361.5
(22) Date of filing: 14.07.2008
(51) Int. Cl.: F23R 3/14, F23R 3/34, B22F 3/22

(54) **Components capable of transporting liquids manufactured using injection molding**

(30) Priority: 15.07.2007 US 778049
(71) Applicant: GENERAL ELECTRIC COMPANY, Schenectady, NY 12345 (US)
(72) Inventor: McMasters, Marie Ann, Mason, OH 45040 (US); Budinger, David Edwin, Loveland, OH 45140 (US); Durstock, Daniel L., Fort Wright, KY 41011 (US)
(74) Representative: Illingworth-Law, William Illingworth

(57) **Abstract**

Fuel nozzles (10) including a fuel conduit supply (12) having at least one pilot cavity (16) and at least one main cavity(18), and a distributor ring (14) having at least one injection post (24) extending outwardly therefrom, the distributor ring (14) operably coupled to each of the at least one pilot cavity (16) and at least one main cavity (18) wherein the nozzle (10) is fabricated using metal injection molding.

## Description

### TECHNICAL FIELD

Embodiments described herein generally relate to components capable of transporting liquids manufactured using metal injection molding methods. More specifically, embodiments described herein relate generally to fuel nozzles manufactured using metal injection molding.

### BACKGROUND OF THE INVENTION

In gas turbine engines, such as aircraft engines, air is drawn into the front of the engine and then compressed by a shaft-mounted compressor. The compressed air is then transported to the combustor while fuel is concurrently transported from a fuel supply by a fuel distribution system to the combustor. More specifically, the fuel is introduced at the front end of a burner in a highly atomized spray from a fuel nozzle. Compressed air flows in around the fuel nozzle and mixes with the fuel to form a fuel-air mixture, which is ignited by the burner. The temperature of the ignited fuel-air mixture can reach an excess of 3500°F (1920°C). It is therefore important that the fuel supply and distribution systems are substantially leak free, as a leak in the fuel supply or distribution systems could be catastrophic.

Currently available fuel nozzles may be made using macro-laminate technology, which generally involves shaping and coupling plies of material together using a series of bonded joints. Surrounding the macro-laminate may be a variety of components that require numerous braze joints. Due largely to the number of braze joints required to construct fuel nozzles in this manner, the use of macro-laminate technology is not ideal.

More specifically, the use of braze joints can increase the time needed to fabricate such components and can also complicate the fabrication process for any of several reasons, including: the need for an adequate region to allow for braze alloy placement; the need for minimizing unwanted braze alloy flow; the need for an acceptable inspection technique to verify braze quality; and, the necessity of having several braze alloys available in order to prevent the re-melting of previous braze joints. Moreover, numerous braze joints can result in several braze runs, which can weaken the parent material of the component. In a related aspect, the presence of numerous braze joints can undesirably increase the weight and manufacturing cost of the component.

Therefore, there remains a need for improved fuel supply and distribution systems that can reduce or eliminate the previously described problems.

### BRIEF DESCRIPTION OF THE INVENTION

Embodiments herein generally relate to fuel nozzles including a fuel conduit supply having at least one pilot cavity and at least one main cavity, and a distributor ring having at least one injection post extending outwardly therefrom, the distributor ring operably coupled each of the at least one pilot cavity and at least one main cavity wherein the nozzle is fabricated using metal injection molding.

Embodiments herein also generally relate to fuel nozzles including a fuel conduit supply having a non-linear pilot cavity, a main cavity branched into a main cavity left side and a main cavity right side, wherein the pilot cavity, main cavity right side and main cavity left side are separated from one another by a distance of at least about 0.02cm, and a distributor ring having a plurality of integral injection posts extending outwardly therefrom, the distributor ring operably coupled to each of the pilot cavity, main cavity left side and main cavity right side of the fuel conduit supply wherein the nozzle is fabricated using metal injection molding and the fuel conduit supply and distributor ring are sintered together.

Embodiments herein also generally relate to fuel nozzles comprising a fuel conduit, and a distributor ring wherein the fuel nozzle is fabricated using metal injection molding.

These and other features, aspects and advantages will become evident to those skilled in the art from the following disclosure.

### BRIEF DESCRIPTION OF THE DRAWINGS

While the specification concludes with claims particularly pointing out and distinctly claiming the invention, it is believed that the embodiments provided by way of example only set forth herein will be better understood from the following description in conjunction with the accompanying figures, in which like reference numerals identify like elements.
FIG. 1 is a schematic representation of one embodiment of a fuel nozzle in accordance with the description herein;
FIG. 2 is a schematic representation of one embodiment of a fuel nozzle having a branched main cavity and a plurality of injection posts in accordance with the description herein;
FIG. 3 is a schematic cross-sectional representation of one embodiment of a fuel nozzle enclosed by heat shields and having an insulation gap in accordance with the description herein;
FIG. 4 is a schematic representation of one embodiment of a fuel nozzle having a pilot injector in accordance with the description herein;
FIG. 5 is a schematic partial cut-away view of one embodiment of a gas turbine engine having an axially oriented fuel nozzle in accordance with the description herein; and
FIG. 6 is a schematic partial cut-away view of one embodiment of a gas turbine engine having a circumferentially oriented fuel nozzle in accordance with the description herein.

### DETAILED DESCRIPTION OF THE INVENTION

Embodiments described herein generally relate to components capable of transporting liquids manufactured using metal injection molding methods. While embodiments herein may generally focus on components useful in the transport of jet fuel through the fuel systems of gas turbine engines, it will be understood by those skilled in the art that the description should not be limited to such. Indeed, as the following description explains, the methods described herein may be utilized to produce any component capable of being used to transport a liquid.

Generally, embodiments set forth herein relate to providing a mold, injecting a component material into the mold to produce a green component, heating the green component to produce a brown component, and sintering the brown component to produce a finished component capable of transporting a liquid.

Initially, a mold may be provided having the form of the desired finished component. The mold may be any mold suitable for use with metal injection molding processes as set forth in greater detail herein below. Generally, the mold may be constructed of steel or other comparable material. As is typical of metal injection molding, the mold can have an internal space corresponding to the external shape of the component being fabricated.

At least one core may be placed inside the mold to form a cavity within the finished component. As used herein, the term "core" means at least one. It will be understood that the embodiments described herein may include more than one core. The core may be fabricated from any core material having a lower melting point than the component material as described herein below to facilitate removal of the core. In one embodiment, the core may be fabricated from a core material selected from the group consisting of SLA-type resins, polycarbonates, polypropylene, and combinations thereof. The core may be either linear or non-linear. Depending on the type of component being fabricated, it may be desirable to suspend the core in the mold using known techniques in the art. Suspending the core can help ensure that the core is completely surrounded by the component material. This can further reduce the likelihood of leaks in the finished component.

A component material may then be injected into the mold about the core using conventional injection molding practices, which can typically involve injecting the component material into the mold at a pressure of from about 200 psi to about 400 psi. If desired, the mold into which the component material is injected may be heated to a temperature of about 90°C (about 200°F) to facilitate injection and dispersal of the component material in the mold. While the component material may comprise any material capable of being injection molded, in one embodiment the component material may be selected from the group consisting of nickel based alloys, cobalt based alloys, and combinations thereof. More specifically, the component material may comprise a metallic powder mixed with from about 3% to about 20% of a binder material, by weight. For example, the component material may comprise about 93% by weight Inconel 718 powder combined with about 7% by weight of a binder material. Any common binder material known to those skilled in the art is acceptable for use herein. The component material can have a consistency that is capable of being injected under pressure into the mold without leaking out of the mold.

Once injected, the component material may be allowed to firm up inside the mold to produce a green component. The time necessary for this set up to occur will vary depending on the particular component material selected. After the component material has set up, the mold may be pulled and the green component removed. If desired, the green component may be dried and/or cooled to make handling easier.

The green component may then be heated to produce a brown component, as well as to burn out any cores present. The resulting brown component will be hardened and will have an internal cavity located where each core had been. As previously discussed, it is desirable that the cores are made from a material having a melting point that is lower than the melting point of the component material in order to facilitate burning-out of the cores. The temperature to which the green component can be heated to produce the brown component, and to burn out any cores present, may vary depending on the particular component material and core material used. However, in one embodiment, the green component can be heated to a temperature ranging from about 150°F to about 500°F (about 65°C to about 260°C). Core burnout can occur by carrying out several heating steps over the previously set forth temperature range wherein the temperature of the furnace containing the component can be increased by about twenty-five degrees over about five minutes, followed by holding the temperature constant for a defined length of time.

More specifically, core burnout can include the following steps: the furnace can be heated to a temperature of about 300°F (about 148°C) and held constant for about one hour; the temperature can then be raised to about 325°F (about 162°C) over a period of about a five minutes and held constant for about two hours; the temperature can then be raised to about 350°F (about 176°C) over a period of about five minutes and held constant for about two additional hours; the temperature can then be raised to about 375°F (about 190°C) over a period of about five minutes and held constant for about two hours; the temperature can then be raised to about 400°F (about 204°C) over a period of about five minutes and held constant for about two hours during which time the core will start to liquefy and burn out of the component. The temperature can then be raised to about 425°F (about 218°C) over a period of about five minutes and held constant for about six to seven hours. After about six to seven hours, the resulting brown component can be inspected to ensure the core has been substantially removed.

In addition to burning out the core, this heating process can be used to remove any ash remaining in the resulting brown component and/or the air furnace in which the core burnout occurs. More particularly, after completion of the core burnout and while the brown component is still present inside, the furnace can be heated to about 625°F (about 329°C), to burn any residual ash content from within the brown component and the furnace. When satisfied that the core burnout is complete, the furnace can be turned off and the brown component allowed to cool.

Concurrent with burning out the core, partial debinding of the component material may occur. During partial debinding, at least a portion of the binder material used in the component material is burned out of the green component. Partial debinding provides ease of handling and transport of the resulting brown component from the air furnace to a vacuum furnace, where sintering occurs. It should be noted that complete debinding of the component material generally does not occur until completion of the sintering cycle as explained herein below.

Sintering involves heating the brown component to volatilize any remaining binder and densifying the remaining metal particles of the component material together to produce a finished component. In particular, sintering can densify the brown component by eliminating the voids created during debinding. Generally, sintering can shrink the finished component by about 3% to about 20% when compared to the size of the brown component. Those skilled in the art will understand that it may be desirable to control the amount of shrinkage to provide dimensional reproducibility and help minimize variation between components made using the methods set forth herein.

While the heating and cooling cycles used for sintering can vary, in one embodiment, sintering may be carried out in a series of cycles over a temperature range of from about 700°F to about 2300°F (about 370°C to about 1260°C). Sintering may be carried out in a vacuum furnace having partial pressure capability. In one embodiment, the furnace may be evacuated and then backfilled with argon or hydrogen gas to a pressure of about 600 microns of Hg. The gas may be intermittently or continuously flowed through the furnace to purge the volatized binder generated throughout the sintering process.

The sintering process may be initiated while the furnace is at ambient temperature. The brown component may be placed into the furnace and the furnace heated at a temperature increase of about 5°F (about 2.7°C)/minute until the temperature reaches about 1200°F (about 648°C). Once a temperature of about 1200°F (about 648°C) is reached, it may be held constant for about one hour. The furnace may then be cooled at a rate of about 5°F (about 2.7°C)/minute until a temperature of about 300°F (148°C) is reached. Cooling may be accomplished by, for example, controlled power reduction to the heating elements of the furnace. The furnace may then be heated again at a rate of about 5°F (about 2.7°C)/minute to a temperature of about 1200°F (about 648°C) where it may be held constant for about two hours. The furnace may then be cooled at a rate of about 5°F (about 2.7°C)/minute until a temperature of about 300°F (148°C) is reached. The furnace may then be heated at a rate of about 5°F (about 2.7°C)/minute to a temperature of about 1200°F (about 648°C) where it may be held constant for about two hours. Next, the furnace may be cooled at a rate of about 5°F (about 2.7°C)/minute to a temperature of about 300°F (about 148°C), followed by heating one additional time at a rate of about 10°F (about 5°C)/minute to a temperature of about 1200°F (about 648°C). The furnace may then be allowed to cool to ambient temperature.

The chamber of the vacuum furnace may then be evacuated to a pressure of less than about 1 micron of mercury. Heating may then be reinitiated by increasing the temperature at a rate of about 5°F (about 2.7°C)/minute to a temperature of about 1500°F (about 815°C) where it may be held constant for about two hours. The temperature may then be increased to about 2000°F (about 1093°C) at a rate of about 5°F (about 2.7°C)/minute. After holding the temperature constant for about two hours, it may again be increased, this time at a rate of about 35°F (about 19°C)/minute until it reaches a temperature of about 2300°F (about 1260°C). The temperature may be held at this temperature for an additional two hours before being vacuum cooled at a rate of about 10°F (about 5°C)/minute until a temperature of about 2000°F (about 1093°C) is reached. Vacuum cooling may then be continued at an uncontrolled rate until the temperature reaches below about 1200°F (about 648°C), and in one embodiment, until the temperature reaches about 250°F (about 121°C).

The resulting finished component is capable of transporting a liquid, which in one embodiment, may be a flammable liquid such as liquid jet fuel. More specifically, sintering densifies the cavities resulting from the burned-out cores and reduces the porosity of the cavity walls to enable the transport of liquids. This reduction of porosity results in a finished component that can be from about 95% to about 99% dense. As used herein, the term "dense" refers to the percent of the finished component that is non-porous and can be measured using conventional image analysis techniques. For example, the finished component can be cut up and a piece of the finished component can be placed under a microscope. A microscopic photograph of the piece of the finished component can be taken and the area of any voids, or porous areas, present can be calculated with respect to the total area of the piece of the finished component shown in the photograph.

Optionally, pressure may be applied to the finished product using a technique known in the art as Hot Isostatic Pressing, or HIP/"hipping." More specifically, during hipping, any remaining voids within the finished component resulting from debinding can be removed by heating the finished component to a temperature of from about 2100°F (about 1149°C) to about 2200°F (about 1204°C), and in one embodiment about 2125°F (about 1163°C), under from about 10ksi to about 20ksi argon pressure, and in one embodiment about 15 ksi (about 1055 kgf/cm²) argon pressure, and holding these parameters constant for about four hours. The end result of the hipping process is a densified component that is at least about 99.9% dense.

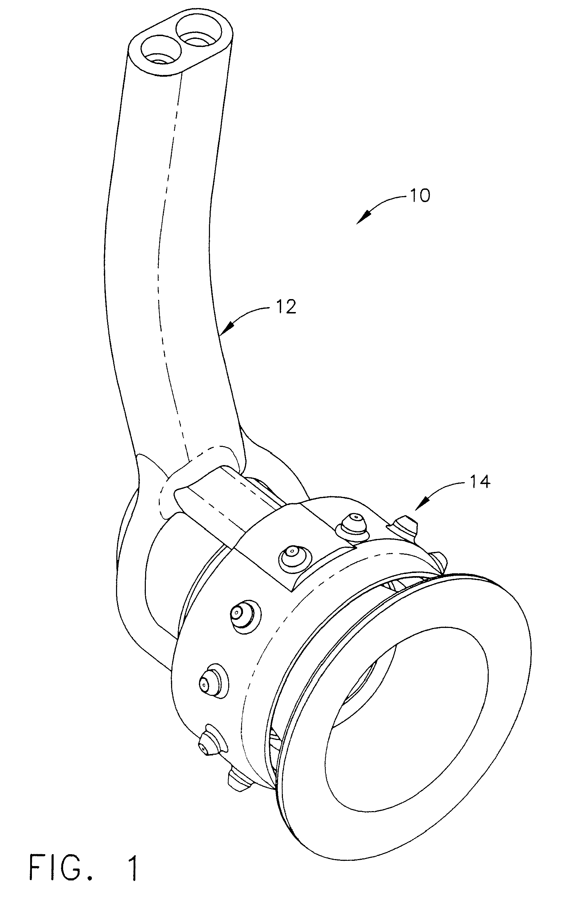

While the previously described injection molding methods may be used to fabricate any component capable of transporting a fluid, in one embodiment, the methods may be used to fabricate a fuel nozzle 10, as shown generally in FIG. 1. Fuel nozzle 10 may include a fuel conduit supply 12 and a distributor ring 14.

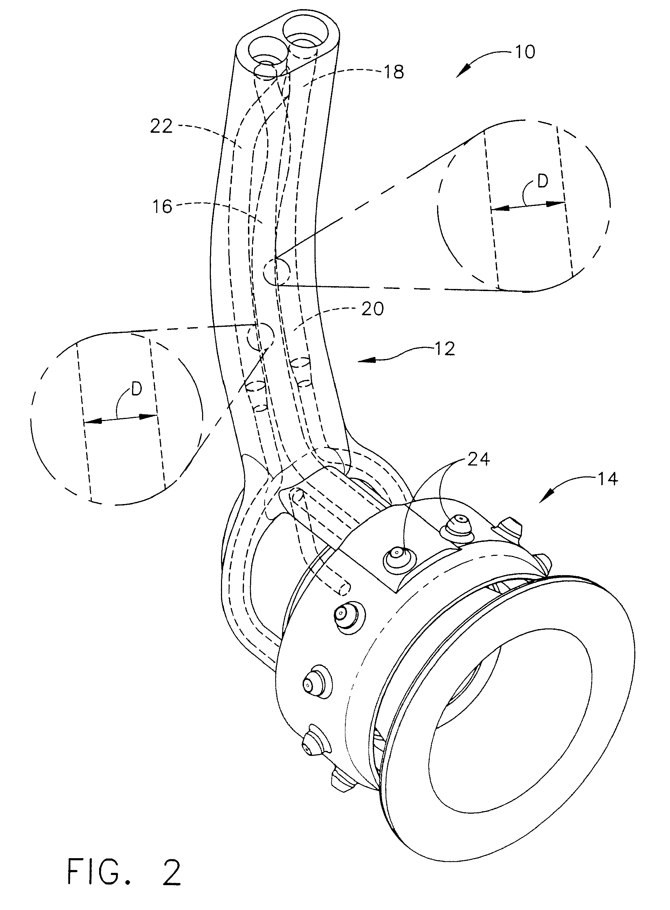

Turning to FIG. 2, fuel conduit supply 12 may comprise at least one pilot cavity 16 and at least one main cavity 18, each fabricated using the previously described cores during the injection molding process. As used herein throughout, the term "at least one" includes both one and more than one. Pilot cavity 16 and main cavity 18 may each be generally linear, non-linear, or some combination thereof. In one embodiment, as shown in FIG. 2, main cavity 18 may branch into a main cavity right side 20 and a main cavity left side 22. Regardless of the number or orientation of pilot cavity 16 and main cavity 18, it may be desirable that all cavities present in fuel conduit supply 12 are separated from each other by a distance D of at least about 0.02cm. Spacing the cavities by at least about 0.02cm can help ensure that the cores that form the cavities are adequately surrounded by the component material during fabrication, which can help to prevent leakage in the finished component.

Distributor ring 14, which may be operably coupled to at least one pilot cavity 16 and at least one main cavity 18, may have at least one injection post 24 extending outwardly therefrom. In the embodiment shown in FIG. 2, distributor ring 14 includes a plurality of injection posts 24, which can help maintain the fuel velocity until the fuel is injected into a mixer cavity where the fuel mixes with air causing combustion. Because the metal injection molding process set forth herein includes the use of cores, injection post 24 can be integral with distributor ring 14. More specifically, prior to injection molding distributor ring 14 having injection post 24, one or more cores can be suspended within the mold as described previously to account for channels (not shown) within distributor ring 14 and injection post 24. This arrangement allows distributor ring 14 to be molded with integral injection posts 24 rather than the current practice of fabricating the distributor ring and then subsequently attaching one or more injection posts manually.

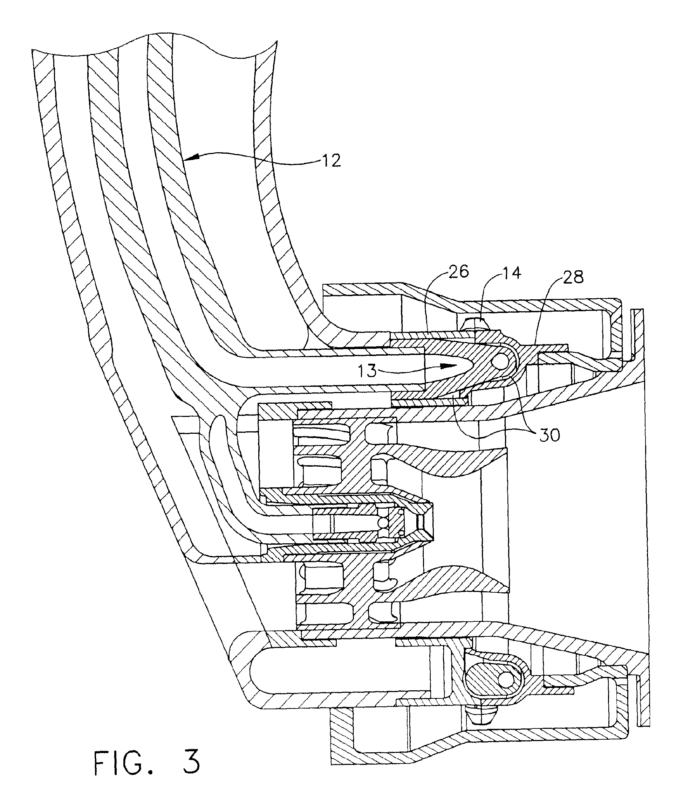

In one embodiment, the previously detailed metal injection molding process may be used to separately fabricate fuel conduit supply 12 and distributor ring 14 up through the brown component portion of the process. The brown fuel conduit and the brown distributor ring may then be coupled together by inserting the brown fuel conduit into at least one corresponding inlet 13, shown in FIG. 3, of the distributor ring prior to carrying out the sintering and optional hipping processes such that the fuel conduit supply 12 and distributor ring 14 are fixed together during fabrication to form fuel nozzle 10. This permanent coupling of fuel conduit supply 12 and distributor ring 14 can eliminate the use of braze joints and reduce the likelihood of leakage that may result therefrom.

Distributor ring 14 may also be enclosed by a forward heat shield 26 coupled to an aft heat shield 28 that together can form an insulation gap 30 about distributor ring 14, as shown in FIG. 3. Forward heat shield 26 and aft heat shield 28 may be constructed from, for example, Inconel 718, and can be fabricated using any of a variety of methods known to those skilled in the art, such as, for example, casting, metal injection molding or other machining method. Heat shields 26, 28 can be brazed together around fuel distributor ring 14. Gap 30 insulates the fuel from the hot air that flows through cavities in fuel nozzle 10, which helps prevent the fuel from getting too hot and coking.

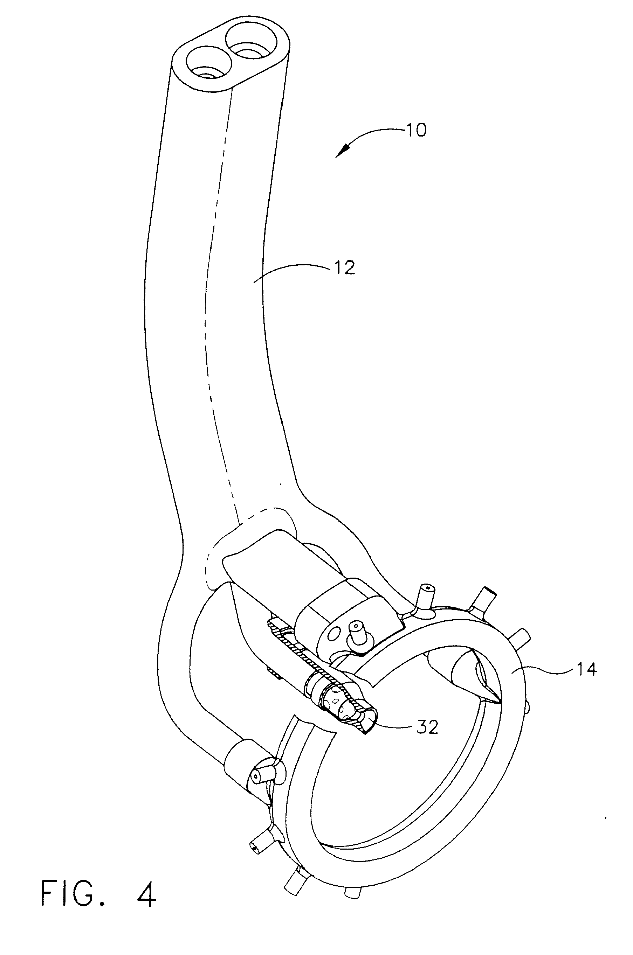

Fuel nozzle 10 may additionally comprise at least one pilot injector 32 as shown in FIG. 4. In general, pilot injector 32 can be operably coupled to the pilot cavity where it can serve as the main fuel supply for ignition of the engine. Pilot injector 32 may generally be a machined part that can be brazed to fuel conduit supply 12. In one embodiment, pilot injector 32 can be made from the same material as fuel conduit supply 12.

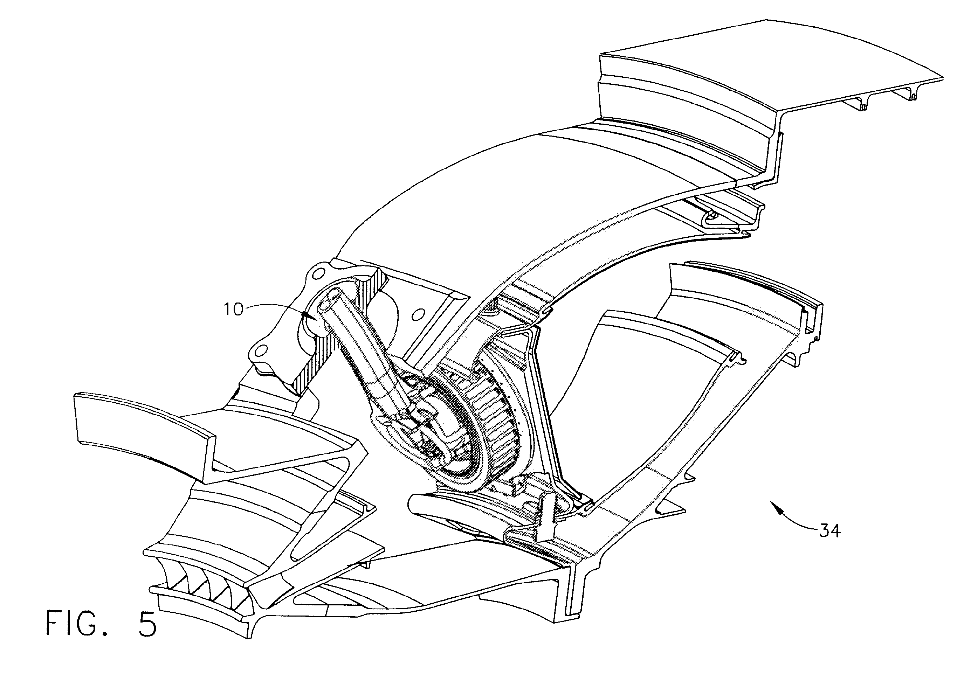

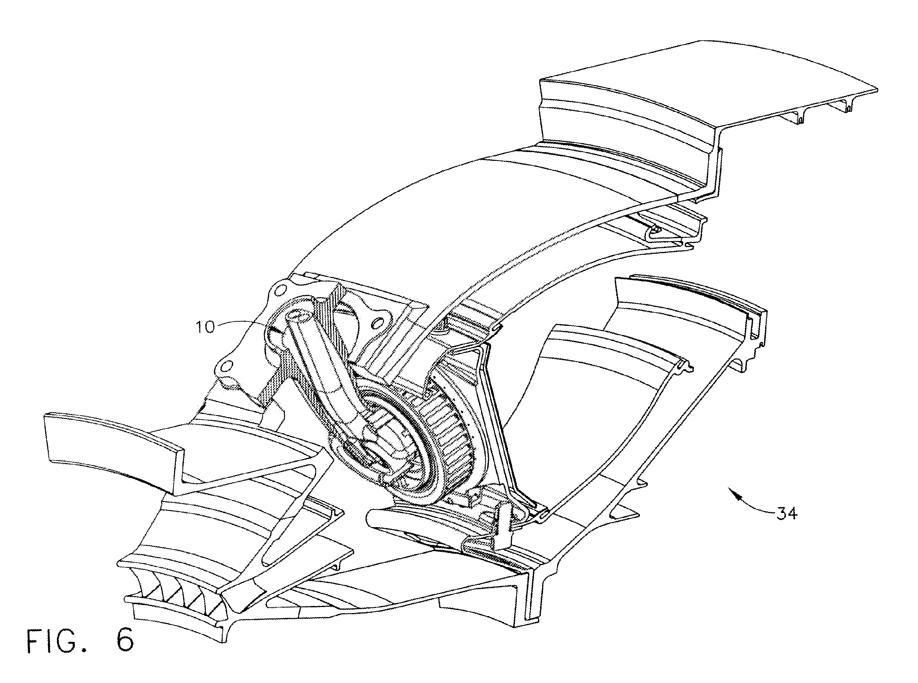

Regardless of the exact configuration, the fuel nozzle may be oriented either axially, as shown in FIG. 5, or circumferentially as shown in FIG. 6, in relation to the engine 34 in which it is placed. Axial orientation may be desired to help reduce the weight and size of nozzle 10, however, those skilled in the art will understand that nozzle 10 must have low enough thermal stresses to meet part life requirements. Circumferential orientation may be desired to reduce thermal stresses on nozzle 10. Either orientation is acceptable for use in conjunction with the embodiments set forth herein.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Aspects of the present invention are defined in the following numbered clauses:
1. A fuel nozzle comprising:
   a fuel conduit supply having
      at least one pilot cavity and at least one main cavity; and
   a distributor ring having at least one injection post extending outwardly
      therefrom, the distributor ring operably coupled to each of the at least one pilot cavity and at least one main cavity
   wherein the nozzle is fabricated using metal injection molding.
2. The nozzle of clause 1 wherein the main cavity branches into a main cavity left side and a main cavity right side.
3. The nozzle of clause 1 wherein the pilot cavity and the main cavity are non-linear.
4. The nozzle of clause 1 further comprising at least one pilot injector.
5. The nozzle of clause 4 wherein the pilot cavity is operably coupled to the pilot injector.
6. The nozzle of clause 1 wherein the fuel conduit and distributor ring are sintered together.
7. The nozzle of clause 1 wherein the pilot cavity and main cavity are separated from one another by a distance of at least about 0.02cm.
8. The nozzle of clause 1 wherein the injection post is integral with the distributor ring.
9. The nozzle of clause I wherein the distributor ring comprises a plurality of injection posts extending outwardly therefrom.
10. The nozzle of clause 1 wherein the distributor ring is enclosed by a forward heat shield coupled to an aft heat shield that together form an insulation gap around the distributor ring.
11. The nozzle of clause 1 wherein the fuel conduit supply is axially or circumferentially oriented.
12. A fuel nozzle comprising:
   a fuel conduit supply having
      a non-linear pilot cavity;
      a main cavity branched into a main cavity left side and a main cavity right side, wherein the pilot cavity, main cavity right side and main cavity left side are separated from one another by a distance of at least about 0.02cm; and
   a distributor ring having a plurality of integral injection posts extending
      outwardly therefrom, the distributor ring operably coupled to each of the pilot cavity, main cavity left side and main cavity right side of the
      fuel conduit supply
   wherein the nozzle is fabricated using metal injection molding and the fuel conduit supply and distributor ring are sintered together.
13. The nozzle of clause 12 wherein the main cavity left side and main cavity right side are non-linear.
14. The nozzle of clause 12 further comprising at least one pilot injector.
15. The nozzle of clause 14 wherein the pilot cavity is operably coupled to the pilot injector.
16. The nozzle of clause 12 wherein the distributor ring is enclosed by a forward heat shield coupled to an aft heat shield that together form an insulation gap around the distributor ring.
17. The nozzle of clause 12 wherein the fuel conduit supply is axially or circumferentially oriented.
18. A fuel nozzle comprising:
   a fuel conduit; and
   a distributor ring
wherein the fuel nozzle is fabricated using metal injection molding.

## Claims

1. A fuel nozzle (10) comprising:
a fuel conduit supply (12) having:
at least one pilot cavity (16) and at least one main cavity (18) separated from one another by a distance of at least 0.02cm; and
a distributor ring (14) having at least one injection post (24) extending outwardly
therefrom, the distributor ring (14) operably coupled to each of the at
least one pilot cavity (16) and at least one main cavity (18)
wherein the nozzle (10) is fabricated using metal injection molding.

2. A nozzle (10) according to claim 1 wherein the main cavity (18) branches into a main cavity left side (22) and a main cavity right side (20).

3. A nozzle (10) according to any of claims 1 or 2 wherein the pilot cavity (16) and the main cavity (18) are non-linear.

4. A nozzle (10) according to any of claims 1, 2 or 3 further comprising at least one pilot injector (32).

5. A nozzle (10) according to any of claims 1, 2, 3 or 4 wherein the pilot cavity (16) is operably coupled to the pilot injector (32).

6. A nozzle (10) according to any of claims 1, 2, 3, 4 or 5 wherein the fuel conduit (12) and distributor ring (14) are sintered together.

7. A nozzle (10) according to any of claims 1, 2, 3, 4, 5 or 6 wherein the injection post (24) is integral with the distributor ring (14).

8. A nozzle (10) according to any of claims 1, 2, 3, 4, 5, 6, or 7 wherein the distributor ring (14) comprises a plurality of injection posts (24) extending outwardly therefrom.

9. A nozzle (10) according to any of claims 1, 2, 3, 4, 5, 6, 7 or 8 wherein the distributor ring (14) is enclosed by a forward heat shield (26) coupled to an aft heat shield (28) that together form an insulation gap (30) around the distributor ring (14).

10. A nozzle (10) according to any of claims 1, 2, 3, 4, 5, 6, 7, 8 or 9 wherein the fuel conduit supply (12) is axially or circumferentially oriented.
